Europäisches Patentamt

(19) European Patent Office

Office européen des brevets

(11) Publication number: **0 115 375**
**B1**

(12) **EUROPEAN PATENT SPECIFICATION**

(45) Date of publication of patent specification: **15.04.87**

(51) Int. Cl.⁴: **B 01 D 13/04,** A 01 N 59/14,
A 61 L 2/18

(21) Application number: **84300030.8**

(22) Date of filing: **04.01.84**

(54) Semi-permeable membrane storage solutions.

(30) Priority: **05.01.83 US 455872**

(43) Date of publication of application:
**08.08.84 Bulletin 84/32**

(45) Publication of the grant of the patent:
**15.04.87 Bulletin 87/16**

(84) Designated Contracting States:
**BE DE FR GB IT NL**

(56) References cited:
**EP-A-0 095 524**
**DE-C- 675 400**
**GB-A- 16 410**
**US-A-3 278 445**
**US-A-3 850 797**

**PATENTS ABSTRACTS OF JAPAN, vol. 3, no.
46(C-43), 18th April 1979, page 142 C43;**

**CHEMICAL ABSTRACTS, vol. 90, no. 20, 14th
May 1979, page 517, no. 160122c, Columbus
Ohio (USA);**

(73) Proprietor: **E.I. DU PONT DE NEMOURS AND
COMPANY**
**1007 Market Street**
**Wilmington Delaware 19898 (US)**

(72) Inventor: **Brown, Charles Julian, Jr.**
**Box 65, R.D. 4**
**Hockessin Delaware 19707 (US)**

(74) Representative: **Jones, Alan John et al**
**CARPMAELS & RANSFORD**
**43 Bloomsbury Square**
**London, WC1A 2RA (GB)**

**Description**

## BACKGROUND OF THE INVENTION

Semi-permeable or reverse osmosis membranes have long been used for the purification of water. Such membranes are useful, for example, in the removal of dissolved inorganic salts. In such processes, water containing the dissolved salts is held under pressure against a membrane through which water can pass but the salt ions cannot.

Cellulosic and polyamide reverse osmosis membranes are generally used in the form of hollow fibers or flat films in cartridges for the purification of saline and brackish water. It is often necessary, however, to store these reversse osmosis membranes for extended periods before they are put into use. The membranes are normally stored in a wet condition, and bacteriostats such as formaldehyde have been added in the past to inhibit the growth of bacteria during storage. This formaldehyde often resulted in a degradation of the membranes and required other additives to permit the use of this bacteriostat for extended storage periods, such as those additives described in Applegate et al. US—A—4,293,420.

## SUMMARY OF THE INVENTION

The instant invention provides an improved storage solution for reverse osmosis membranes and a process for using this solution which provides excellent protection against bacterial growth without the' inconvenience of the formaldehyde previously used to inhibit such growth.

Specifically, the instant invention provides a solution comprising or consisting essentially of water and 50—2500 ppm of an alkali metal metalborate and 50—2500 ppm of an alkali or alkaline earth metal salt of ethylene diamine tetraacetic acid (EDTA).

The instant invention also provides a process for storing reverse osmosis membrane, e.g. a cellulosic or polyamide reverse osmosis membrane, by immersing the membrane in an aqueous medium, characterised in that it comprises adding to the aqueous medium 50—2500 ppm of alkali metal metaborate and 50—2500 ppm of an alkali or alkaline earth metal salt of ethylene diamine tetraacetic acid.

Preferably, the aqueous solution further comprises up to 30 weight percent of glycerin.

## DETAILED DESCRIPTION OF THE INVENTION

The present invention is applicable to a wide variety of reverse osmosis membranes prepared from polyamides and cellulosic derivatives. However, particularly satisfactory polyamide membranes are those aromatic, nitrogen containing polymeric membranes described in Richter et al. US—A—3,567,632, hereby incorporated by reference. Similarly, the present invention is applicable to the many known membranes of cellulosic derivatives, including, for example, cellulose acetate and cellulose triacetate. Such membranes are described in Manjikian, et al., US—A—3,344,214, hereby incorporated by reference.

Either type of membrane can be in any convenient form, including flat membranes as well as spun hollow fibers. Typically, a reverse osmosis cartridge containing many individual permselective hollow fiber membranes is prepared and shipped in a water-wet state for installation in a reverse osmosis apparatus. The aqueous medium used for storage generally has a pH of about 4—11.

The aqueous storage medium can also contain up to 30% by weight, and preferably 16—20% by weight, of a polyol to reduce the freezing point of the storage solution to permit safe storage of the membranes at exceptionally low temperatures. Particularly preferred are glycerin (1,2,3-propane/triol) or propylene glycol/(1,2-propane/diol).

The alkali metal metaborate used in accordance with the present invention are commercially available in the form of white powders. Sodium or potassium metaborates are particularly preferred because of their ready availability. The concentration of the alkaline metal metaborate in the aqueous storage solution should be in the range of 50—2500 ppm. Less than 50 parts per million provides little effect in the prevention of bacterial growth, while no significant additional benefit is obtained at concentrations of this component in excess of 2500 ppm. The alkali metal metaborate can be added directly to the storage solution or in the form of an aqueous concentrate. For ease of handling, it is preferred to add the alkali metal metaborate in the form of an aqueous concentrate.

Ethylene diamine tetraacetic acid (EDTA) is added in the form of an alkali or alkaline earth metal salt. A wide variety of salts can be used, including di- and tetra-salts of alkali metals, of which the di- salts of sodiuim and potassium are particularly preferred. Of the alkaline earth metal salts, calcium salts are particularly preferred. Alkali and alkaline earth metal salts of EDTA are commercially available as crystalline white powders. These salts can be added to the aqueous solution directly or as an aqueous concentrated solution. For convenience of storage and ease of weighing, the EDTA salts are preferably added directly as a solid. The disodium salts of EDTA are particularly preferred, since these salts result in a substantially neutral pH when added to the storage solution.

The salts of EDTA are added to provide a concentration of 50—2500 ppm in the aqueous storage solution. Less than 50 ppm of the salt results in little inhibitory effect on bacteria growth, while concentrations in excess of 2500 ppm provide no significant additional benefits.

Preferably, the alkali metal metaborate and the EDTA salt are each present in a concentration of at least 100 ppm, and concentrations of 500—2500 ppm of each of these components gives especially uniform and satisfactory results.

2

**0 115 375**

The order of addition of the alkali metal metaborate and the EDTA salt is not critical, and these additives can be combined with the storage solution in any convenient manner.

The combination of alkali metal metaborate and EDTA salt provides outstanding performance in the inhibition of the growth of bacteria in storage solutions for semi-permeable membranes. This combination inhibits the growth of a broader spectrum of bacteria than either the EDTA salt or the alkali metal metaborate alone.

The present invention is further illustrated by the following specific examples, in which parts and percentages are by weight unless otherwise indicated.

Example 1 and Comparative Examples A—C

In Example 1 and Comparative Examples A—C, solutions of 18% glycerin and water were inocculated with three strains of bacteria. In Example 1, disodium EDTA and sodium metaborate were added to the solution at concentrations of 500 ppm and 100 ppm, respectively. In comparative Example A no biocide was added to the solution, while in comparative Examples B and C the solutions contained, respectively, 500 ppm of disodium EDTA and 100 parts of sodium metaborate. All solutions, after inocculation with the three strains of bacteria, were incubated for a period of 6 weeks. The concentrations of these bacteria expressed in Colary Forming Units/ml (CFU/ml) are summarized in the following Table.

TABLE

| Example | Biocide | Bacteria | Bacteria Concentration (CFU/ml) |
|---------|---------|----------|----------------------------------|
| 1 | Disodium EDTA | $CA^1$ | <10 |
| | Sodium metaborate | $MA^2$ | <10 |
| | | $PF^3$ | <10 |
| A | None | CA | $4 \times 10^3$ |
| | | MA | $9 \times 10^4$ |
| | | PF | $4 \times 10^5$ |
| B | Disodium EDTA | CA | $6 \times 10^1$ |
| | | MA | $4 \times 10^2$ |
| | | PF | $1 \times 10^1$ |
| C | Sodium Metaborate | CA | <10 |
| | | MA | $3 \times 10^1$ |
| | | PF | <10 |

[1]Corynebacterium/Arthrobacter
[2]Moraxella/Acinctobacter
[3]Pseudomonas fragi

The disodium EDTA alone resulted in a moderate reduction in all three strains of bacteria while the sodium metaborate alone resulted in substantial elimination of the CA and PF strains of bacteria with a reduction in the MA strain of bacteria. However, in combination, the disodium EDTA and sodium metaborate resulted in the substantial elimination of all three strains of bacteria.

**Claims**

1. A solution comprising or consisting essentially of water and 50—2500 ppm of an alkali metal metaborate and 50—2500 ppm of an alkali or alkaline earth metal salt of ethylene diamine tetraacetic acid (EDTA).

2. An aqueous solution of Claim 1 comprising up to 30 weight percent of glycerin.

3. An aqueous solution of Claim 1 or 2 wherein the alkali metal metaborate is a potassium or sodium metaborate.

4. An aqueous solution of Claim 1, 2 or 3 wherein the EDTA salt is a sodium or potassium salt.

3

5. An aqueous solution of Claim 1, 2, or 3 wherein the EDTA salt is a calcium salt.

6. An aqueous solution of any one of Claims 1 to 5 wherein the concentration of each of the alkali metal metaborate and the EDTA salt is at least 100 ppm.

7. An aqueous solution of Claim 6 wherein the concentration of each of the alkali metal metaborate and the EDTA salt is 500—2500 ppm.

8. A process for storing reverse osmosis membrane by immersing the membrane in an aqueous medium, characterised in that it comprises adding to the aqueous medium 50—2500 ppm of alkali metal metaborate and 50—2500 ppm of an alkali or alkaline earth metal salt of ethylene diamine tetraacetic acid.

9. A process of Claim 8 wherein the reverse osmosis membrane is prepared from a polyamide.

10. A process of Claim 8 wherein the reverse osmosis membrane is prepared from a cellulosic derivative.

11. A process of Claim 10 wherein the reverse osmosis membrane is prepared from cellulose acetate.

**Patentansprüche**

1. Lösung, enthaltend oder im wesentlichen bestehend aus Wasser und 50 bis 2500 ppm eines Alkalimetallmetaborats und 50 bis 2500 ppm eines Alkali- oder Erdalkalimetallsalzes von Ethylendiamintetraessigsäure (EDTA).

2. Wässrige Lösung nach Anspruch 1, enthaltend bis zu 30 Gew.% Glycerin.

3. Wässrige Lösung nach Anspruch 1 oder 2, worin das Alkalimetallmetaborat ein Kalium- oder Natriummetaborat ist.

4. Wässrige Lösung nach Anspruch 1, 2 oder 3, worin das EDTA-Salz ein Natrium- oder Kaliumsalz ist.

5. Wässrige Lösung nach Anspruch 1, 2 oder 3, worin das EDTA-Salz ein Calciumsalz ist.

6. Wässrige Lösung nach einem der Ansprüche 1 bis 5, worin die Konzentration des Alkalimetallmetaborats wie des EDTA-Salzes jeweils wenigstens 100 ppm beträgt.

7. Wässrige Lösung nach Anspruch 6, worin die Konzentration des Alkalimetallborats und des EDTA-Salzes jeweils 500 bis 2500 ppm beträgt.

8. Verfahren zur Konservierung von Membranen für die reverse Osmose durch Eintauchen der Membran in ein wässriges Medium, dadurch gekennzeichnet, daß es die Zugabe von 50 bis 2500 ppm Alkalimetallmetaborat und 50 bis 2500 ppm eines Alkali- oder Erdalkalimetallsalzes von Ethylendiamintetraessigsäure zum wässrigen Medium umfaßt.

9. Verfahren nach Anspruch 8, worin die Membran für die reverse Osmose aus Polyamid hergestellt ist.

10. Verfahren nach Anspruch 8, worin die Membran für die reverse Osmose aus einem Cellulosederivat hergestellt ist.

11. Verfahren nach Anspruch 10, worin die Membran für die reverse Osmose aus Celluloseacetat hergestellt ist.

**Revendications**

1. Une solution comprenant ou consistant essentiellement en eau et 50—2500 ppm d'un métaborate de métal alcalin et 50—2500 ppm d'un sel de métal alcalin ou alcalino-terreux d'acide éthylène-diamine-tétraacétique (EDTA).

2. Une solution aqueuse selon la revendication 1, comprenant jusqu'à 30% en poids de glycérine.

3. Une solution aqueuse selon la revendication 1 ou 2 dans laquelle le métaborate de métal alcalin est un métaborate de potassium ou de sodium.

4. Une solution aqueuse selon la revendication 1, 2 ou 3, dans laquelle le sel d'EDTA est un sel de sodium ou de potassium.

5. Une solution aqueuse selon la revendication 1, 2 ou 3, dans laquelle le sel d'EDTA est un sel de calcium.

6. Une solution aqueuse selon l'une quelconque des revendications 1 à 5, dans laquelle la concentration du métaborate de métal alcalin et la concentration du sel d'EDTA sont chacune d'au moins 100 ppm.

7. Une solution aqueuse selon la revendication 6, dans laquelle la concentration du métaborate de métal alcalin et la concentration du sel d'EDTA sont chacune de 500—2500 ppm.

8. Un procédé pour conserver une membrane d'osmose inverse par immersion de la membrane dans un milieu aqueux, caractérisé en ce qu'il consiste à ajouter au milieu aqueux 50—2500 ppm de métaborate de métal alcalin et 50—2500 ppm d'un sel de métal alcalin ou alcalino-terreux d'acide éthylène-diamine-tétraacétique.

9. Un procédé selon la revendication 8 dans lequel la membrane d'osmose inverse est préparée à partir d'un polyamide.

10. Un procédé selon la revendication 8 dans lequel la membrane d'osmose inverse est préparée à partir d'un dérivé cellulosique.

11. Un procédé selon la revendication 10 dans lequel la membrane d'osmose inverse est préparée à partir d'acétate de cellulose.